# EUROPÄISCHE PATENTANMELDUNG

(11) **EP 2 568 003 A1**
(43) Veröffentlichungstag der Anmeldung: **13.03.2013**
(21) Anmeldenummer: 11180252.6
(22) Anmeldetag: 06.09.2011
(51) Int. Cl.: C08K 5/00, C08K 5/17, C08K 5/5398, C08K 5/548, C08K 3/36, C08K 13/02, C08L 7/00, C08L 9/00, C08L 21/00, B60C 1/00

(54) **Füllstoffmischungen für Kautschukmischungen**

(71) Anmelder: Rhein Chemie Rheinau GmbH, 68219 Mannheim (DE)
(72) Erfinder: Säwe, Martin, 69488 Birkenau (DE); Hoff, Dietmar, 67122 Altrip (DE)
(74) Vertreter: Siegers, Britta

(57) **Zusammenfassung**

Die Erfindung betrifft Füllstoffmischungen enthaltend:
a) ein Dithiophosphat und/oder eine Dithiophosphorsäure
b) ein Mercaptosilan
c) eine Kieselsäure, sowie gegebenenfalls
d) ein Amin oder eine Mischung aus mehreren Aminen
sowie daraus hergestellte Kautschukmischungen und deren Verwendung in silicahaltigen Reifen.

## Beschreibung

Die Erfindung betrifft neue Füllstoffmischungen sowie daraus hergestellte Kautschukmischungen und deren Verwendung im silicahaltigen Reifen.

Silicahaltige Reifen finden in vielen Bereichen Anwendung, so z.B. im Luftreifen oder auch im Vollgummireifen.

Die Einarbeitung von Silica in üblicherweise verwendeten Kautschuken ist eine besondere Herausforderung, da die polare Oberfläche mit den Kautschuken unverträglich ist. Die Silicapartikel neigen daher dazu, in der Polymermatrix zu agglomerieren. Es wird daher versucht, durch den Zusatz diverser Materialien eine homogene Verteilung zu gewährleisten.

Aus EP-A 0501227 sind für Reifen Mischungen aus Kieselsäure und Silanen bekannt, die sich gut verarbeiten lassen. Das dort verwendete Vernetzungssystem bestehend aus Schwefel, Sulfenamid und Diphenylguanidin (DPG) hat sich weitgehend für silicahaltige Reifen durchgesetzt.

Aus WO201046139 sind für Reifen z.B. Mischungen aus Kieselsäure und Mercaptosilanen bekannt. Diese haben den Nachteil, dass sich diese Kautschukmischungen bei der Herstellung von Reifen nur sehr schlecht verarbeiten lassen.

Auf der Tagung "International Rubber Conference 2009" vom 29.06. bis 02.07.2011 in Nürnberg wurde im Rahmen eines Vortrags von Oliver Klockmann berichtet, dass der Gehalt von Aminen und insbesondere DPG für eine gute Verarbeitbarkeit von Mischungen enthaltend Kieselsäure und Mercaptosilan minimiert bzw. eliminiert werden muss.

Es bestand daher ein großer Bedarf an einfach zu verarbeitenden Reifenmischung, die zudem über gute physikalische Eigenschaften verfügen und die auch die Verwendung von Aminen als Aktivator ermöglichen.

Überraschenderweise wurde nun gefunden, dass sich Reifenmischung, enthaltend mindestens ein Dithiophosphat und/oder eine Dithiophosphorsäure neben Kieselsäure und mindestens einem Mercaptosilan in hervorragender Weise verarbeiten lassen und zudem die Verwendung von Aminen als Aktivatoren erlauben.

Gegenstand der vorliegenden Erfindung sind daher Mischung enthaltend
a) mindestens ein Dithiophosphat und/oder mindestens eine Dithiophosphorsäure,
b) mindestens ein Mercaptosilan und
c) mindestens eine Kieselsäure und
d) gegebenenfalls ein Amin oder eine Mischung aus mehreren Aminen.

Bevorzugt ist dabei eine Mischung, enthaltend
a) mindestens eine Dithiophosphorsäure,
b) mindestens ein Mercaptosilan und
c) mindestens eine Kieselsäure und
d) gegebenenfalls ein Amin, besonders bevorzugt in Anwesenheit mindestens eines Amins.

Bei den Dithiophosphaten im Sinne der Erfindung handelt es sich vorzugsweise um Verbindungen der Formel (I) 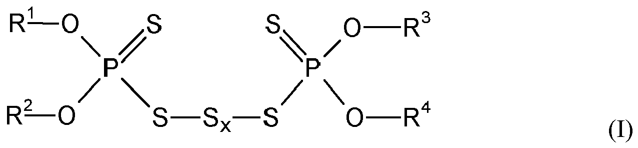 mit
R¹ gleich oder ungleich R², R³, R⁴ und
R² gleich oder ungleich R³, R⁴ und
R³ gleich oder ungleich R⁴ und
R¹, R², R³, R⁴ = C₃-C₁₈-verzweigte oder lineare Alkylreste, bevorzugt C₃-C₁₂-verzweigte oder lineare Alkylreste, besonders bevorzugt sind R¹ - R⁴ gleich und entsprechen C₄-C₈-verzweigten oder linearen Alkylresten
   und
x = 0 - 12, bevorzugt 1 - 8.

Bei den Dithiophosphaten handelt es sich um handelsübliche Substanzen, die z.B. bei der Firma Rhein Chemie Rheinau GmbH erhältlich sind.

Bei den Dithiophosphorsäuren im Sinne der Erfindung handelt es sich vorzugsweise um Verbindungen der Formel (II) 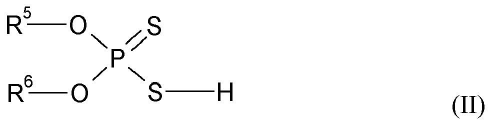 mit
R⁵ gleich oder ungleich R² und
R⁵, R⁶ = C₃-C₁₈-verzweigte oder lineare Alkylreste, bevorzugt C₃-C₁₂-verzweigte oder lineare Alkylreste.

In einer besonders bevorzugten Ausführungsform der Erfindung sind R⁵ und R⁶ gleich und entsprechen C₄-C₈-verzweigten oder linearen Alkylresten.

Bei den Dithiophosphorsäuren handelt es sich um handelsübliche Substanzen, die z.B. bei der Firma Rhein Chemie Rheinau GmbH erhältlich sind.

Bei dem Mercaptosilan b) im Sinne der Erfindung handelt es sich besonders bevorzugt um eine Verbindung der Formel (III) 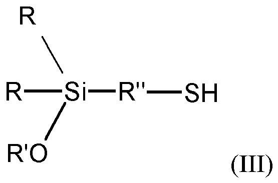 wobei
- R: gleich oder verschieden sein kann und eine C₁-C₈-Alkyl-, vorzugsweise CH₃ oder CH₂CH₃, C₁-C₈-Alkenyl-, C₁-C₈-Aryl-, C₁-C₈-Aralkylgruppe oder eine OR'-Gruppe ist, und
- R': gleich oder verschieden sein kann und eine C₁-C₂₄-, vorzugsweise C₁-C₄- oder C₁₂-C₁₈-, besonders bevorzugt CH₂CH₃, verzweigte oder unverzweigte Alkyl- oder Alkenyl-Gruppe, eine Arylgruppe, eine Aralkylgruppe, ein Wasserstoff (-H), eine Alkylethergruppe mit -(CR"'₂)-O-Alk oder -(CR"'₂)_{y}-O-Alk oder eine Alkylpolyethergruppe -(CR'")₂O)_{y}-Alk oder -(CR"'₂-CR"'₂-O)-_{y}-Alk, mit y = 2-20, bevorzugt 2-10, besonders bevorzugt 3-6, wobei Alk die Bedeutung einer verzweigten oder unverzweigten, gesättigten oder ungesättigten, aliphatischen, aromatischen oder gemischt aliphatischen/aromatischen C₁-C₃₀-, bevorzugt C₂-C₂₀-, besonders bevorzugt C₆-C₁₈-, ganz besonders bevorzugt C₁₀-C₁₈-Kohlenwasserstoffgruppe ist,
- R"': unabhängig voneinander H oder eine C₁-C₁₈-Alkylgruppe, vorzugsweise CH₃-Gruppe, ist und
- R": eine verzweigte oder unverzweigte aliphatische, -(C-H₂)₂-, Reste, mit z = 1 - 20 bevorzugt 1-10, ganz besonders bevorzugt 1-7, die gegebenenfalls mit F-, Cl-, Br-, I-, HS-, NH₂- oder NHR' substituiert sind.

Besonders bevorzugt sind Triethoxysilylpropylmercaptosilan und/oder α,α-[ethoxy(3-mercaptopropyl)silylene]bis[ω-(tridecyloxy)-Poly(oxy-1,2-ethanediyl).

Bei den Mercaptosilanen handelt es sich um handelsübliche Substanzen, die z.B. bei der Firma Evonik Degussa AG erhältlich sind.

Bei der Kieselsäure c) kann es sich um beliebige verstärkende Kieselsäuren handeln, die dem Fachmann bekannt sind, insbesondere beliebige Fällungskieselsäuren oder pyrogene Kieselsäuren mit einer BET-Oberfläche sowie einer mit CTAB (Cetyltrimethylammoniumbromid) bestimmten spezifischen Oberfläche, die beide unter 450 m²/g liegen, wobei jedoch hochdispergierbare Fällungskieselsäuren bevorzugt sind, insbesondere wenn die Erfindung zur Herstellung von Reifen mit einem geringen Rollwiderstand dient. Beispiele für bevorzugte hochdispergierbare Kieselsäuren schließen beispielsweise ein: Perkasil® KS 430 (AKZO), BV 3380 und Ultrasil®GR7000 (Evonik AG), Zeosil® 1165 MP und 1115 MP (Rhodia), Hi-Sil^{™} 2000 (PPG), Zeopol 8715, 8741 oder 8745 (Huber) und behandelte Fällungskieselsäuren wie beispielsweise mit Aluminium "dotierten" Kieselsäuren, die in der EP-A-0 735 088 beschrieben sind. Ein oder mehrere Kieselsäuren können verwendet werden.

Die Kieselsäure kann in dabei Form von Pulvern, Mikroperlen, Granulaten oder Kugeln vorliegen.

In einer weiteren Ausführungsform der vorliegenden Erfindung kann diese Mischung zusätzlich mindestens ein primäres, sekundäres und/oder tertiäres Amin aliphatischer oder aromatischer Natur oder Mischungen der vorgenannten Amine enthalten.

Amine im Sinne der Erfindung sind Monoamine oder Polyamine, sowohl aromatischer als auch aliphatischer Natur. Monoamine im Sinne der Erfindung sind beispielsweise primäre Amine, wie Ammoniak oder andere Monoamine mit 1 bis 30 Kohlenstoffatomen, wobei 1 bis 24 Kohlenstoffatome bevorzugt und 1 bis 18 Kohlenstoffatome besonders bevorzugt sind. Nicht limitierende Beispiele für Monoamine sind Methylamin, Ethylamin, Butylamin, 2-Ethylhexylamin, Dodecylamin und Octadecylamin. Nicht limitierende Beispiele für sekundäre Monoamine sind Dimethylamin, Diethylamin, Methylbutylamin, etc. Nicht limitierende Beispiel für tertiäre Monoamine sind Trimethylamin, Tributylamin, Ethyldibutylamin, etc. Ein spezielles Monoamin im Sinne der Erfindung ist beispielsweise ein tertiär-aliphatisches primäres Amin. Solche tertiär-aliphatischen primären Amine sind beschrieben in US-A 2,945,749. Aromatische Amine sind beispielsweise Anilin oder Diphenylguanidin (DPG).

In einer weiteren Ausführungsform kann das Amin auch ein Hydroxylamin sein. Typischerweise sind Hydroxylamine im Sinne der Erfindung primäre, sekundäre oder tertiäre Alkanolamine oder Mischungen daraus. Solche Amine können durch die Formeln H₂-N-R'-OH, H(R₁)-N-R'-OH und (R₁)₂-N-R'-OH dargestellt werden.

In einer weiteren Ausführungsform kann das Amin auch ein Polyamin sein. Polyamine im Sinne der Erfindung umfassen auch alkoxylierte Diamine, unverzweigte und verzweigte Diamine wie Ethylendiamin, Isophorondiamin, Hexamethylendiamin, Dodecyldiamin. Ein typischer Vertreter der Polyamine im Sinne der Erfindung ist Spermidin.

Hersteller von Aminen, die im Sinne der Erfindung eingesetzt werden können, ist beispielsweise die Firma BASF SE. Tertiär aliphatische primäre Amine werden beispielsweise von der Firma DOW unter dem Markennamen Primene^{™} vertrieben.

Die erfindungsgemäße Mischung weist vorzugsweise die folgende Zusammensetzung auf 0,05 und 10 Gew.-Teile mindestens eines Dithiophosphats oder einer Dithiophosphorsäure oder einer Mischung der beiden a), bevorzugt 0,05 und 10 Gew.-Teile mindestens einer Dithiophosphorsäure, 3 - 20 Gew.-Teile mindestens eines Mercaptosilans b),
0 - 10 Gew.-Teile mindestens eines Amins d),
bezogen auf 100 Teile Kieselsäure c).

Die erfindungsgemäße Mischung wird dabei durch Vermischen der Bestandteile a) bis c) und gegebenenfalls d) in beliebiger Reihenfolge erfolgen.

Geeignete Mischaggregate zur Herstellung der erfindungsgemäßen Mischung sind handelsübliche Mischaggregate zum Vermischen von Flüssigkeiten mit Pulvern, wie z.B. Turbomischer. Solche Mischaggregate sind handelsüblich und werden z.B. von der Firma Plasmec SRL. vertrieben.

Gegenstand der vorliegenden Erfindung sind zudem Kautschukmischungen, enthaltend mindestens ein Polymer und mindestens eine der erfindungsgemäßen Mischungen.

Kautschukmischungen im Sinne der Erfindung sind unvernetzte Polymere.

Bei dem Polymer handelt es sich vorzugsweise um Polybutadienen (BR), Polyisoprenen (IR), Naturkautschuk (NR), Butadien-Styrol-Copolymeren (SBR), Butadien-Isopren-Copolymeren (BIR), Isopren-Styrol-Copolymeren (SIR), Butadien-Styrol-Isopren-Copolymeren (SBIR) oder den Gemischen von zwei oder mehreren dieser Verbindungen handelt. Diese können auch mit funktionellen Gruppen, wie z.B. Mercapto, Carboxyl und/oder Carbonylgruppen modifiziert sein. Diese Polymere sind beispielsweise bei der Firma Lanxess Deutschland GmbH erhältlich

Besonders bevorzugt sind die mittels Lösungspolymerisation hergestellten Polymere und/oder deren Gemische mit Naturkautschuk (NR) S-SBR, S-SBR/NR, S-SBR/NR/BR, S-SBR/BR.

In einer weiteren bevorzugten Ausführungsform der Erfindung enthalten die erfindungsgemäßen Kautschukmischungen weitere Bestandteile, wie Vernetzer, wie z.B. Schwefel, Peroxide, etc., Antioxidantien, weitere Füllstoffe, wie z.B. Ruß, Beschleuniger, wie z.B. Sulfenamide, Retarder, wie z.B. Vulkalent® G der Firma Lanxess Deutschland GmbH.

Dabei können alle für Reifen eingesetzten Zusatzstoffe und Hilfsmittel verwendet werden.

Die Menge an erfindungsgemäßer Mischung, d.h. Dithiophosphat und/oder Dithiophosphorsäure, Mercaptosilan, Kieselsäure und ggf. Amin, in dem Polymer in der Kautschukmischung beträgt vorzugsweise 20 bis 200, besonders bevorzugt 30 bis 150 phr.

Zur Herstellung der erfindungsgemäßen Kautschukmischung wird vorzugsweise das Polymer vorgelegt, die Kieselsäure zugeführt und anschließende mindestens eine Dithiophosphorsäure und/oder mindestens ein Dithiophoshat a), mindestens ein Mercaptosilan b) und gegebenenfalls das Amin oder eine Mischung von Aminen d) zugegeben. Die gegebenenfalls vorhandenen weiteren Bestandteilen der Kautschukmischung können zu jedem beliebigen Zeitpunkt zugegeben werden.

Als Mischaggregate sind Innenmischer oder Kneter bevorzugt. Alle anderen Mischaggregate sind jedoch ebenfalls einsetzbar.

Ein weiteren Gegenstand der vorliegenden Erfindung ist die Verwendung der Mischung aus a) mindestens einer Dithiophosphorsäure und/ oder mindestens einem Dithiophosphat, mindestens einem Mercaptosilan b), mindestens einer Kieselsäure c) und gegebenenfalls einem Amin oder eine Mischung aus mehreren Aminen d) zur Herstellung füllstoffhaltiger Kautschukmischungen.

Ein weiteren Gegenstand der vorliegenden Erfindung ist die Verwendung der erfindungsgemäßen Kautschukmischungen für Reifen. Der Begriff Reifen umfasst dabei sowohl die Luft- als auch die Vollgummireifen.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeisniele:

Es wurden folgende Substanzen eingesetzt:
- SSBR = das Butadien-Styrol-Copolymer Buna VSL 5025-2 HM Lanxess Deutschland GmbH (enthält 37.5 Teile Öl auf 100 Teile Polymer),
- BR = Polybutadien Buna CB24, der Lanxess Deutschland GmbH,
- Kieselsäure = Ultrasil® GR 7000, der Evonik AG,
- Mercaptosilan der Formel (III) mit R= -(O(CH₂)₂-O)₅-(CH₂)₁₂-CH₃, R'= C₂H₅ und (R" = (CH₂)₃ der Evonik AG,
- Stearinsäure der Firma Ambrogio Pagani S.p.a.,
- ZnO mit einer Reinheit > 99%, der Firma Brüggemann Chemical,
- TMQ= Vulkanox® HS als Antioxidans, der Lanxess Deutschland GmbH,
- 6PPD = N-(1,3-dimethylbutyl)-N'-phenyl-p-Phenylenediamin, Vulkanox® 4020, als Antioxidans, der Lanxess Deutschland GmbH,
- Mikrokristallines Wachs als Antiozonant, Antilux® 654 der Rhein Chemie Rheinau GmbH,
- TBBS = N-t-butyl-2-benzothiazolsulfenamid, Vulcacit ® NZ ein Beschleuniger, der Lanxess Deutschland GmbH,
- DPG = Diphenylguanidin, Rhenocure ® DPG, ein Beschleuniger, der Firma Rhein Chemie Rheinau GmbH,
- Schwefel mit einer Reinheit von >= 94%, der Firma Solvay & CPC,
- Dithiophosphat der Formel (I) mit R¹ - R⁴ = 2-Ethylhexyl und x = 2, der Firma Rhein Chemie Rheinau GmbH als Rhenocure® SDT/S,
- Dithiophosphorsäure der Formel (II) mit R⁵ - R⁶ = 2-Ethylhexl, der Firma Rhein Chemie Rheinau GmbH als Rhenogran® ADT-50 und
- Primene^{™} als tertiär aliphatisches primäres Amin der Firma DOW.

**Die Zusammensetzungen der Kautschukmischungen ergibt sich aus der nachstehenden Tabelle**

**Tabelle 1. Eigenschaften von Mischungen mit verschiedenen Silanen und Additiven**

| Inhaltsstoffe für Beispiel Nr. | **1 (V)** | **2 (E)** | **3 (E)** | **4 (E)** |
|---|---|---|---|---|
| SSBR | 103.1 | 103.1 | 103.1 | 103.1 |
| BR | 25 | 25 | 25 | 25 |
| Kieselsäure | 80 | 80 | 80 | 80 |
| Mercaptosilan | 9 | 9 | 9 | 9 |
| Stearinsäure | 1 | 1 | 1 | 1 |
| ZnO | 2.5 | 2.5 | 2.5 | 2.5 |
| TMQ | 1 | 1 | 1 | 1 |
| 6PPD | 1 | 1 | 1 | 1 |
| Mikrokristallines Wachs | 1 | 1 | 1 | 1 |
| TBBS | 1.7 | 1.7 | 1.7 | 1.7 |
| DPG | 2 | 2 | 2 | |
| Schwefel | 1.4 | 1.4 | 1.4 | 1.4 |
| Dithiophosphat | | 0.5 | | |
| Dithiophosphorsäure | | | 0.3 | 0.6 |
| Primene^{™} | | | 0.2 | 0,3 |
| Total phr | 228.7 | 229.2 | 229.2 | 229.7 |
| V = Vergleichsbeispiel | | | | |
| E = erfindungsgemäßes Beispiel | | | | |
| Mooney Viskosität | | | | |
| ML(1+4)@100°C[MU] | 96 | 81 | 81 | 76 |
| | | | | |
| MDR 160°C, 60 min | | | | |
| ML, [dNm] | 4.8 | 3.3 | 3.4 | 3.0 |
| MH, [dNm] | 21.0 | 19.9 | 19.2 | 19.7 |
| T 10, [min] | 0.9 | 1.5 | 1.9 | 2.4 |
| T50, [min] | 9.2 | 7.4 | 7.2 | 6.3 |
| T90, [min] | 26.9 | 13.5 | 12.4 | 9.4 |
| | | | | |
| Rheovulkameter @160°C | | | | |
| max. Volumenstrom [mm³/s] | 20.7 | 41.4 | 39.2 | 48.1 |

| | | | | |
|---|---|---|---|---|
| MDR-Messung ermittelt den Verlauf der Vulkanisation nach DIN 53529 Teil 3 | | | | |

Es zeigt sich, dass die erfindungsgemäßen Mischungen deutlich besser verarbeitbar sind (siehe niedrige ML-Werte und hohe Volumenströme) als die nach dem Stand der Technik bekannten Mischungen. Aus den MDR-Messungen ist ersichtlich, dass die erfindungsgemäßen Mischungen über einen längeren Zeitraum stabil verarbeitbar sind als die nach dem Stand der Technik bekannten Mischungen (siehe T10-Werte). Zudem ist die Ausvulkanisation bei den erfindungsgemäßen Mischungen deutlich schneller (T90), was zu einer höheren Produktivität beiträgt.

## Patentansprüche

1. Mischung enthaltend
a) mindestens ein Dithiophosphat und/oder mindestens eine Dithiophosphorsäure,
b) mindestens ein Mercaptosilan und
c) mindestens eine Kieselsäure sowie gegebenenfalls
d) ein Amin oder eine Mischung aus mehreren Aminen.

2. Mischung nach Anspruch 1, **dadurch gekennzeichnet, dass** es sich bei dem Dithiophosphat um eine Verbindung der Formel (I) 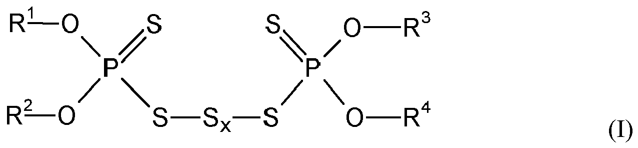 handelt, mit
R¹ gleich oder ungleich R², R³, R⁴ und
R² gleich oder ungleich R³, R⁴ und
R³ gleich oder ungleich R⁴ und
R¹, R², R³, R⁴ = C₃-C₁₈-verzweigte oder lineare Alkylreste, bevorzugt C₃-C₁₂-verzweigte oder lineare Alkylreste und
x = 0 - 12, bevorzugt 1 - 8.

3. Mischung nach Anspruch 1 oder 2, **dadurch gekennzeichnet, dass** es sich bei der Dithiophosphorsäure um eine Verbindung der Formel (II) 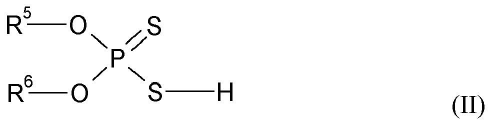 handelt, mit
R⁵ gleich oder ungleich R⁶ und
R⁵, R⁶ = C₃-C₁₈-verzweigte oder lineare Alkylreste.

4. Mischung nach einem oder mehreren der Ansprüche 1 bis 3, **dadurch gekennzeichnet, dass** es sich bei dem Mercaptosilan um eine Verbindung der Formel (III)
handelt, wobei 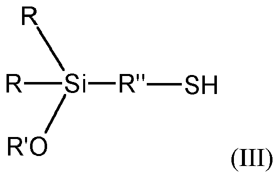
R gleich oder verschieden sein kann und eine C₁-C₈-Alkyl-, vorzugsweise CH₃ oder CH₂CH₃, C₁-C₈-Alkenyl-, C₁-C₈-Aryl-, C₁-C₈-Aralkylgruppe oder eine OR'-Gruppe ist, und
R' gleich oder verschieden sein kann und eine C₁-C₂₄-, vorzugsweise C₁-C₄- oder C₁₂-C₁₈-, besonders bevorzugt CH₂CH₃, verzweigte oder unverzweigte Alkyl- oder Alkenyl-Gruppe, eine Arylgruppe, eine Aralkylgruppe, ein Wasserstoff (-H), eine Alkylethergruppe mit -(CR"'₂)-O-Alk oder -(CR"'₂)_{y}-O-Alk oder eine Alkylpolyethergruppe -(CR'")₂O)_{y}-Alk oder -(CR"'₂-CR"'₂-O)-_{y}-Alk, mit y = 2-20, bevorzugt 2-10, besonders bevorzugt 3-6, wobei Alk die Bedeutung einer verzweigten oder unverzweigten, gesättigten oder ungesättigten, aliphatischen, aromatischen oder gemischt aliphatischen/aromatischen C₁-C₃₀-, bevorzugt C₂-C₂₀-, besonders bevorzugt C₆-C₁₈-, ganz besonders bevorzugt C₁₀-C₁₈-Kohlenwasserstoffgruppe ist,
R"' unabhängig voneinander H oder eine C₁-C₁₈ -Alkylgruppe, vorzugsweise CH₃-Gruppe, ist und
R" eine verzweigte oder unverzweigte aliphatische, -(C-H₂)_{z}-, Reste, mit z = 1 - 20, bevorzugt 1-10, ganz besonders bevorzugt 1-7, die gegebenenfalls mit F-, Cl-, Br-, I-, HS-, NH₂- oder NHR' substituiert sind.

5. Mischung nach einem oder mehreren der Ansprüche 1 bis 4, **dadurch gekennzeichnet, dass** diese zusätzlich mindestens ein primäres, sekundäres und/oder tertiäres Amin enthält.

6. Kautschukmischung enthaltend mindestens ein Polymer und mindestens eine Mischung nach einem oder mehreren der Ansprüche 1 bis 5.

7. Kautschukmischung nach Anspruch 6, **dadurch gekennzeichnet, dass** es sich bei dem Polymer um Polybutadien (BR), Polyisopren (IR), Naturkautschuk (NR), Butadien-Styrol-Copolymere (SBR), Butadien-Isopren-Copolymere (BIR), Isopren-StyrolCopolymere (SIR), Butadien-Styrol-Isopren-Copolymere (SBIR) oder den Gemischen von zwei oder mehreren dieser Verbindungen handelt.

8. Verfahrung zur Herstellung der Kautschukmischung nach Anspruch 6 oder 7, **dadurch gekennzeichnet, dass** der Polymer vorgelegt, die Kieselsäure zugeführt und anschließende mindestens eine Dithiophosphorsäure a) und/oder mindestens ein Dithiophosphat, mindestens ein Mercaptosilan b) und gegebenenfalls das Amin oder eine Mischung von Aminen d) zugegeben werden.

9. Verwendung der Mischung nach einem oder mehreren der Ansprüche 1 bis 5 zur Herstellung füllstoffhaltiger Kautschukmischungen.

10. Verwendung der Kautschukmischung nach Anspruch 6 oder 7 für Reifen.
